# EUROPÄISCHE PATENTSCHRIFT

(11) **EP 1 062 021 B1**
(45) Veröffentlichungstag und Bekanntmachung des Hinweises auf die Patenterteilung: **03.09.2003**
(21) Anmeldenummer: 99908844.6
(22) Anmeldetag: 04.02.1999
(51) Int. Cl.: B01D 53/04, B01J 20/34

(54) **VERFAHREN ZUR RÜCKGEWINNUNG UND/ODER ENTFERNUNG ORGANISCHER VERBINDUNGEN AUS GASSTRÖMEN**
METHOD FOR RECOVERING AND/OR REMOVING ORGANIC COMPOUNDS FROM GAS STREAMS
PROCEDE POUR RECUPERER ET/OU ELIMINER DES COMPOSES ORGANIQUES CONTENUS DANS DES FLUX GAZEUX

(30) Priorität: 09.03.1998 DE 19810028
(43) Veröffentlichungstag der Anmeldung: 27.12.2000
(73) Patentinhaber: Engelhard Process Chemicals GmbH, 30625 Hannover (DE)
(72) Erfinder: SCHMIDT-TRAUB, Henner, D-45257 Essen (DE); BATHEN, Dieter, D-44809 Bochum (DE); SCHULZ, Thomas, D-31812 Bad Pyrmont (DE); HOFFMEISTER, Michael, D-30880 Laatzen (DE)
(74) Vertreter: Grünecker, Kinkeldey, Stockmair & Schwanhäusser Anwaltssozietät
(86) Internationale Anmeldenummer: EP9900733
(87) Internationale Veröffentlichungsnummer: WO99046030

(56) Entgegenhaltungen:
- WO-A-99/03565
- DE-A- 4 414 599
- DE-A- 4 417 081
- DE-A- 19 541 918
- DE-A- 19 703 068

## Beschreibung

Die vorliegende Erfindung betrifft ein Verfahren zur Rückgewinnung und/oder Entfernung organischer Verbindungen aus Gasströmen.

Adsorptionsverfahren eignen sich zur Feinstreinigung von Gasströmen. Eine wichtige Anwendung davon ist die Entfernung von flüchtigen organischen Verbindungen (VOC), wie z.B. Lösungsmitteln. Durch die sich verändernden Prioritäten im Hinblick auf die umweltgerechte Auslegung von Prozessen ist es notwendig, diese Adsorptionsverfahren so zu gestalten, daß ein möglichst hoher Anteil der flüchtigen organischen Verbindungen adsorbiert und diese anschließend durch Desorption wieder rückgewinnbar sind.

Die zur Zeit in der Industrie eingesetzten Sorptionsverfahren bestehen in der Regel aus drei Stufen: In der ersten Stufe wird die Abluft durch einen Adsorber geführt, in dem die enthaltenen Wertstoffe zurückgehalten werden. Anschließend wird der Adsorber z.B. mit überhitztem Wasserdampf beaufschlagt, so daß ein Wasserdampf-Wertstoff-Gemisch der zweiten Stufe, einem Kondensator, zugeführt werden kann. Das dort auskondensierte Gemisch wird anschließend in einer dritten Stufe, z.B. einer Extraktion oder einer Destillation, in den Wertstoff und das Desorptionsmittel aufgetrennt. Bevor der Adsorber wieder eingesetzt werden kann, muß er durch Spülen mit einem heißen Inertgas getrocknet und anschließend gekühlt werden. Bei polaren Adsorptiven ist der dritte Verfahrensschritt besonders kostenintensiv. Daher wird in diesen Fällen häufig eine Temperaturwechseldesorption eingesetzt, bei der die benötigte Energie nicht über Wasserdampf, sondern über ein heißes Spülgas, z.B. Stickstoff, zugeführt wird. Hierbei entfallen zwar die Stofftrennung durch Rektifikation und die Trocknung des Adsorberbetts. Aufgrund der geringen Wärmekapazität des Spülgases müssen jedoch große Spülgasmengen bei hohen Eintrittstemperaturen verwendet werden.

Neuere Verfahren zur Eintragung von Energie in ein Adsorbens konzentrieren sich auf den Einsatz von Mikrowellen. Im Rahmen der verfahrenstechnischen Anwendung wird die zugeführte elektromagnetische Energie unter anderem benutzt, um chemische Reaktionen auszulösen und zu unterhalten oder um aus einem Feststoff eine unerwünschte Komponente auszutreiben. Insbesondere im Bereich der Trocknung von Lebensmitteln und keramischen Werkstoffen wird die Eintragung von Energie durch Mikrowellen industriell angewandt.

Im Bereich der Desorption durch Mikrowellenenergie sind bisher zwei Verfahren beschrieben worden. Die US-A-5282886 beschreibt ein Verfahren, bei dem während der Adsorption die Schüttung mit Mikrowellen bestrahlt wird, um die Selektivität des Adsorptionsprozesses zu erhöhen. In der DE-A-2857134 wird ein Verfahren zur Regeneration beladener Adsorbentien durch dielektrische Erwärmung beschrieben. Als Anwendungsbeispiele werden die Gewinnung von Sauerstoff aus Luft, die Entfernung von SO₂ und H₂S aus Erdgas und die Entfernung von SO₂ aus Rauchgasen genannt

Für das Anbringen der Mikrowellenquelle existieren verschiedene Möglichkeiten. Die Mikrowellenöfen können beweglich außen am Adsorberbett vorgesehen werden, wie z.B. in der CA-A-2082690 beschrieben. Sie können aber auch z.B. oberhalb des Adsorberbetts angebracht sein. Die Mikrowellen werden dann in ein Rohr in der Mitte des Adsorberbetts geleitet und dort reflektiert, wie z.B. in der DE-B-195 26628 beschrieben. EP-A-954368, ein Dokument in Übereinstimmung mit Art. 54(3) EPÜ, offenbart ein Verfahren zur Entfernung gasformiger organischer Stoffe aus Luft, wobei auch Mikrowellen zum Einsatz kommen. Diese Verfahren verwenden die allgemein bekannten Adsorbentien, wie z.B. aktivierte Holzkohle, Zinkoxid, aktiviertes Aluminiumoxid und Molekularsiebe.

Mikrowellen eignen sich zur Eintragung von Energie zur Desorption adsorbierter Substanzen, da Mikrowellen direkt an den mit Mikrowellen wechselwirkenden Materialien Wärme übertragen. Das Heizen mit Mikrowellen schafft eine Hochfrequenz-Schwingbewegung der wechselwirkenden Stoffe durch die kombinierte Wirkung der elektrischen und magnetischen Felder, die mit adsorbierter elektromagnetischer Energie verbunden sind. Der rasche und direkte Temperaturanstieg wird durch diese "molekulare Reibung" hervorgerufen.

Dabei werden nur Moleküle mit polarer Struktur direkt von Mikrowellen angeregt. Man unterscheidet deshalb mikrowellenaktive Moleküle, d.h. Moleküle die mit Mikrowellen wechselwirken, und mikrowellentransparente Moleküle, d.h. Moleküle, die nicht mit Mikrowellen in Wechselwirkung treten.

Die Verwendung der konventionellen Adsorptionsmittel in Verbindung mit Desorptionsverfahren durch Mikrowelleneinstrahlung bringt aber mehrere schwerwiegende Nachteile mit sich.

So ist z.B. die Verwendung von Aktivkohle gleich mehrfach nachteilig. Aktivkohle ist ein so wirksames Adsorptionsmittel, daß es im allgemeinen nicht möglich ist, die adsorbierten Substanzen zerstörungsfrei durch Einstrahlung von Mikrowellenenergie vom Adsorber zu trennen. Weiterhin besteht bei der Verwendung von Aktivkohle eine erhöhte Adsorberbrandgefahr durch die Entstehung sogenannten "hot spots".

Andere konventionelle Adsorbentien haben den Nachteil, daß sie entweder mikrowellentransparent sind, d.h. es ist nicht möglich, die adsorbierten Substanzen durch Mikrowellen wieder vom Adsorber zu trennen, oder sie adsorbieren nur bestimmte Arten von organischen Substanzen. So ist z.B. dealuminierter Zeolith mikrowellentransparent. Gleichzeitig ist dieses Adsorptionsmittel nur für unpolare organische Substanzen geeignet. Da auch unpolare Substanzen mikrowellentransparent sind, ist es praktisch unmöglich, sie vom Adsorber durch Einstrahlung von Mikrowellen zu entfernen. Aluminiumoxid dagegen, obwohl Mikrowellen absorbierend, ist nur für polare Substanzen geeignet.

Ausgehend von den Nachteilen des Standes der Technik ist es daher die Aufgabe der vorliegenden Erfindung, ein Verfahren zur Rückgewinnung von organischen Substanzen zur Verfügung zu stellen, bei dem sowohl polare als auch unpolare organische Substanzen adsorbiert werden können, keine Brandgefahr durch das Adsorptionsmittels auftritt und die adsorbierten organischen Substanzen durch Einstrahlung von Mikrowellenenergie vom Adsorptionsmittel entfernt werden können.

Diese Aufgabe wird durch ein Verfahren zur Rückgewinnung und/oder Entfernung organischer Verbindungen aus Gasströmen gelöst, definiert wie in den Ansprüchen angegeben. Dieser Verfahren umfasst insbesondere die Schritte
- Entfernen der organischen Verbindungen aus dem Gasstrom mittels eines Adsorbens, und
- Desorbieren der organischen Verbindungen von dem Adsorbens unter Einsatz von Mikrowellen,
bekannt aus DE-A-4417081 und DE-A-19541918; sowie daß das Adsorbens eine feindisperse Mischung aus hydrophilen und hydrophoben Adsorbentien ist.

Bevorzugte Ausführungsformen sind in den Unteransprüchen angegeben.

Die desorbierten organischen Verbindungen können entweder kondensiert und damit zurückgewonnen oder einer katalytischen oder thermischen Nachverbrennung zugeführt werden. Bei der Desorbierung der organischen Verbindung kann ein Spülgas verwendet werden. Bevorzugt wird ein Spülgas mit Umgebungstemperatur verwendet.

Das im erfindungsgemäßen Verfahren eingesetzte Adsorptionsmittel ist eine feindisperse Mischung aus mindestens einem hydrophilen und mindestens einem hydrophoben Adsorbtionsmittel. Das Adsorptionsmittel ist ein Formkörper aus mikrodispers in einer Matrix verteilten Einschlüssen bzw. bevorzugt einsolches. Diese Einschlüsse sollten eine Größe von 40 bis 15.000 nm, bevorzugt 50 bis 10.000 nm und insbesondere bevorzugt von 100 bis 5000 nm haben. Diese Mischung gewährleistet, daß das erfindungsgemäße Verfahren sowohl polare als auch unpolare Verbindungen adsorbieren kann. Gleichzeitig verhindert dieses spezielle Adsorptionsmittel die Entstehung der sogenannten "hot spots" und verhindert damit die Entstehung von Bränden. Das erfindungsgemäß verwendete Adsorbtionsmittel wird durch die eingestrahlten Mikrowellen nicht zerstört. Auch die adsorbierten Substanzen können damit zerstörungsfrei zurückgewonnen werden. Das Mischungsverhältnis der Bestandteile des Adsorptionsmittel ist nicht beschränkt. Die Herstellung dieser Adsorptionsmittel wird durch die folgenden Beispiele illustriert.

Werden eine Aluminat- und eine Silikat-Lösung, von denen eine Aktivkohle enthält, vereinigt und als Gemisch sofort in ein Fällöl gegeben, so bilden sich perlförmige Körper aus amorphem Alumosilikat mit Einschlüssen aus Aktivkohle. Weiterhin ist es möglich, eine Aluminumsulfatlösung und eine Silikatlösung, wobei wiederum eine von beiden Aktivkohle enthält, zu vereinigen und anschließend in ein Fällöl zu geben. Hierbei entsteht eine Matrix aus Alumosilikat mit Einschlüssen aus Aktivkohle. Ein Adsorptionsmittel auf Basis von amorphem SiO₂ kann erhalten werden durch Einmischen von Aktivkohle in eine Silikatlösung und anschließende Fällung durch Zugabe einer Säurelösung.

In einem bevorzugten Verfahren wird ein Adsorptionsmittel, das aus einer hydrophilen Matrix mit darin eingebettetem hydrophoben Material besteht, verwendet. Beispielsweise kann eine Matrix aus Alumosilikat oder Silikagel mit Einschlüssen aus Aktivkohle oder dealuminiertem Zeolith verwendet werden. Wichtig ist dabei die feindisperse Verteilung des hydrophoben Materials. Diese Adsorptionsmittel umfassen z.B. partikelförmige Aktivkohle in einem oxidischen Träger auf Basis von SiO₂, Al₂O₃, Aluminiumphosphat oder Alumosilikat.

Es ist es auch möglich, andere hydrophobe Materialien zur Einbettung zu benutzen.

Ein besonders bevorzugtes Adsorptionsmittel wird nach dem sogenannten Sol-Gel-Prozeß hergestellt. Dieses Verfahren ist in der EP-A-570847 beschrieben.

Die in der EP-A-570847 beschriebenen Adsorptionsmittel umfassen 5 bis 40 Gew.% partikelförmige Aktivkohle einer Partikelgröße von 50 bis 10.000 nm in einem oxidischen Träger auf Basis von amorphem SiO₂, Al₂O₃ oder Alumosilikalit, wobei der Träger in einem Fällöl geformt worden ist.

Der BegrifF Aktivkohle, so wie er hier verwendet wird umfasst auch Aktivkohle-Ruß, Aktivkohle-Koks und Graphit.

Es können aber auch andere feindisperse Mischungen aus hydrophilen und hydrophoben Adsorbentien verwendet werden. So kann z.B. die hydrophile Matrix auch aus einem Molekularsieb bestehen.

Darin eingebettet kann ein hydrophobes Material, wie z. B. ein dealuminierter Zeolith, sein. Durch spezielle Kombination der verschiedenen Materialien kann neben einer guten Stoffrückhaltung und guter Desorptionseigenschaft zusätzlich eine Stoffauftrennung erreicht werden.

So können z.B. durch eine mikrowellentransparente Matrix aus dealuminiertem Zeolith, unpolare Verbindungen, die selbst mikrowellentransparent sind, zurückgehalten werden. Enthält diese Matrix mikrodispers verteilte Einschlüsse aus einem Material, das mikrowellenaktiv ist und polare Substanzen adsorbiert (z.B. amorphes SiO₂), kann mit diesem Gemisch nach gemeinsamer Rückhaltung der unpolaren und polaren Verbindungen eine Stofftrennung erfolgen.

Wird ein solcher beladener Adsorber mit Mikrowellen bestrahlt, werden zuerst die mikrowellenaktiven, polaren Substanzen von den mikrowellenaktiven Einschlüssen entfernt. Erst anschließend führt die Erwärmung der Matrix, ausgehend von den Einschlüssen, zur Desorption der mikrowellentransparenten Substanzen von der mikrowellentransparenten Matrix. Solche Stofftrennungen, bei denen zunächst gemeinsam adsorbiert und anschließend selektiv desorbiert wird, sind bislang nicht möglich.

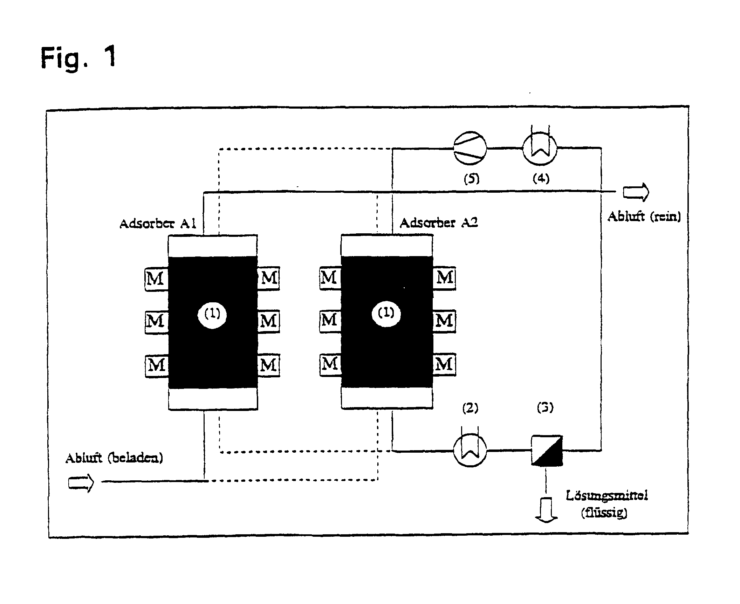

Das erfindungsgemäße Verfahren wird anhand des folgenden Beispiels weiter erläutert. Figur 1 zeigt eine Schaltung von zwei parallelen Adsorptionskolonnen mit einem Spülgaskreislauf.

Während sich eine Adsorber-Kolonne (A1) im Adsorptionstakt befindet, wird die andere Adsorber-Kolonne (A2) regeneriert. Durch entsprechende Taktung derAdsorber-Kolonnen kann eine kontinuierliche Aufbereitung der mit Lösungsmitteln beladenen Abluft sichergestellt werden. Die mit dem Lösungsmittel beladene Abluft gelangt in die Adsorber-Kolonne (A1), in dem das Lösungsmittel von dem Adsorbens adsorbiert wird. Die gereinigte Abluft verläßt über den Kopf die Adsorber-Kolonne (A1). Die Adsorbensschüttung in der Adsorber-Kolonne (A2), die sich im Desorbtionstakt befindet, wird mit Hilfe von Mikrowellengeneratoren (M) mit Mikrowellen bestrahlt. Dadurch wird das gebundene Lösungsmittel desorbiert. Gleichzeitig wird ein geringer Strom eines Spülgases über den Kopf durch die Adsorber-Kolonne (A2) gespült, sodaß das desorbierte Lösungsmittel ausgetragen wird. Dieses Spülgas-Lösungsmittelgemisch wird in einem Kondensator (2) gekühlt, bis das Lösungsmittel auskondensiert. Das flüssige Lösungsmittel wird im Kondensatabscheider (3) abgeschieden und kann wiederverwendet werden. Das Spülgas wird in dem Gaserhitzer (4) auf Umgebungstemperatur erwärmt und über einen Kompressor (5) wieder der Adsorber-Kolonne (A2) zugeführt, so daß ein Spülgaskreislauf realisiert werden kann.

Ist die Adsorptionskapazität der Adsorber-Kolonne (A1) erschöpft, wird die Adsorber-Kolonne (A2) in den Adsorptionstakt und die Adsorber-Kolonne (A1) in den Regenerationstakt geschaltet. Dieser Fall ist in Figur 1 durch die gestrichelten Linien angedeutet.

Die Wirksamkeit dieses Verfahrens konnte in Laborversuchen mit den Lösungsmitteln Aceton, Cyclohexan, Essigsäureethylester, Ethanol, Propanol und Toluol nachgewiesen werden.

Die Partikelgröße der Adsorbermaterialien ist nicht beschränkt. Bevorzugt werden Materialien einer mittleren Partikelgröße von 0,1 bis 10 mm verwendet. Auch der mittlere Porendurchmesser ebenso wie die Porengrößenverteilung ist nicht beschränkt. Bevorzugt werden aber Materialien einer Porengröße von 0,4 bis 50 nm verwendet. Adsorbermaterialien, die bevorzugt in dem erfindungsgemäßen Verfahren eingesetzt werden, haben einen großen Anteil an Mikroporen (< 2 nm), insbesondere bevorzugt einen Mikroporenanteil von größer als 60%.

Die Schüttdichte der Adsorbentien in den Adsorberbetten liegt in dem üblichen Bereich. Die Geschwindigkeit des Gasstromes, der durch den Adsorber geleitet wird, ist ebenfalls im Bereich der üblicherweise verwendeten Geschwindigkeiten.

Das Adsorbermaterial kann auch in Form strukturierter Packungen eingesetzt werden. Dabei ist das Adsorbermaterial auf der Oberfläche eines Formkörpers fixiert. Dieser Formkörper kann beispielsweise wabenförmig sein.

Die Beladung der Gasströme mit zu adsorbierenden Substanzen kann sehr hoch oder auch sehr gering sein. Das erfindungsgemäße Verfahren eignet sich insbesondere zur Feinstreinigung von Gasströmen. Dabei werden Lösungsmittel, Aroma- und Geruchsstoffe oder sonstige Spurenstoffe entfernt. Beispielsweise kann das erfindungsgemäße Verfahren zur Abluftreinigung von Fahrgastzellen von Flugzeugen, Zügen oder Kraftfahrzeugen eingesetzt werden.

Der Frequenzbereich der zu verwendeten Mikrowellenstrahlung ist nicht beschränkt und liegt üblicherweise im Bereich von 300 Mhz und 300 Ghz. Bevorzugt ist der Bereich von 800 bis 3000 Mhz. Die "Federal Communication Commission" hat für den industriellen, wirtschaftlichen und ärztlichen Bereich Frequenzen von 915,2450, 5800 und 22125 Mhz freigestellt.

Das folgende Beispiel erläutert die Erfindung.

### Beispiel 1

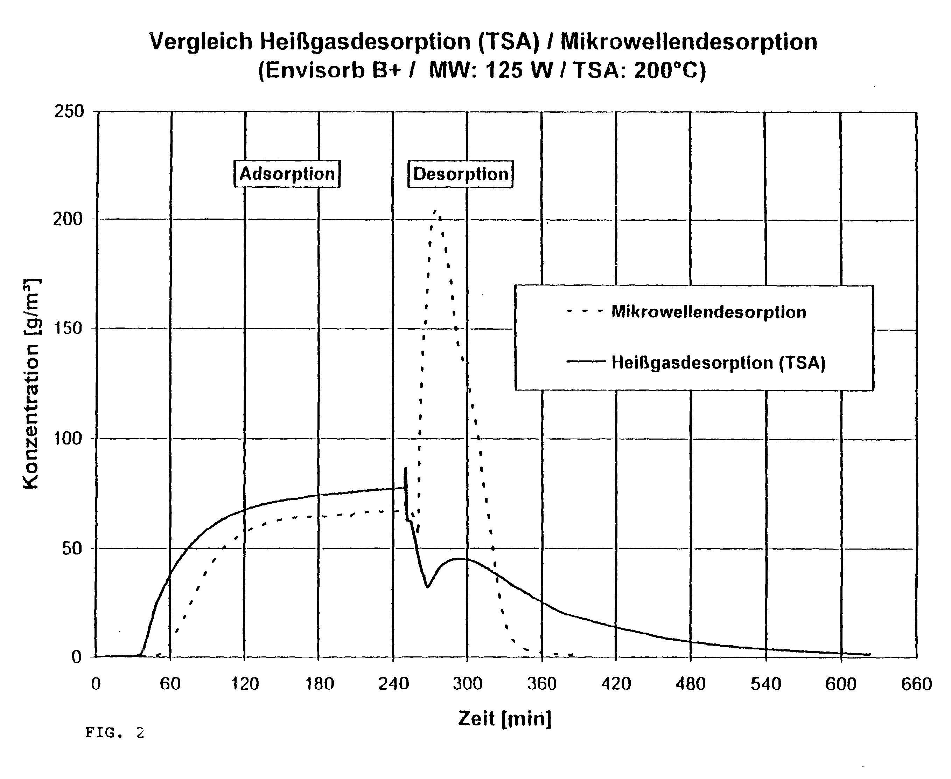

Ein Adsorptionsmittel aus einem Formkörpers aus mikrodispers verteilten Aktivkohleeinschlüssen in einer SiO₂-Matrix wird mit organischen Verbindungen beladen. Anschließend wird ein Desorptionsverfahren durchgeführt, einmal eine Heißgasdesorption, einmal eine Mikrowellendesorption. Die erhaltenen Desorptionskurven sind in Figur 2 dargestellt. Die Mikrowellendesorption wurde bei einer Leistung von 125 W, die Heißgasdesorption bei 200°C durchgeführt. Aus Figur 2 wird deutlich, daß die Desorption durch Mikrowelleneinstrahlung eine wesentlich kürzere Zeit benötigt. Im Vergleich dazu zieht sich die Heißgasdesorption über einen längeren Zeitraum hin. Diese lange Desorptionsdauer führt zu höheren Kosten im Vergleich zur Mikrowellendesorption, gleichzeitig bereitet die dadurch anfallende große Spülgasmenge mit nur geringer Beladung Schwierigkeiten bei der Kondensation der desorbierten Verbindung.

## Patentansprüche (Patentansprüche für folgende(n) Vertragsstaat(en): AT, BE, CH, LI, CY, DK, FI, GR, IE, LU, MC, NL, PT)

1. Verfahren zur Rückgewinnung und/oder Entfernung organischer Verbindungen aus Gasströmen, umfassend die Schritte:
Entfernen der organischen Verbindungen aus dem Gasstrom mittels eines Adsorbens und
Desorbieren der organischen Verbindungen von dem Adsorbens unter Einsatz von Mikrowellen,
**dadurch gekennzeichnet, dass** das Adsorbens eine fein disperse Mischung aus hydrophilen und hydrophoben Adsorbentien ist.

2. Verfahren nach Patentanspruch 1, **dadurch gekennzeichnet, dass** die desorbierten organischen Verbindungen kondensiert oder einer katalytischen oder thermischen Nachverbrennung zugeführt werden.

3. Verfahren nach einem der Patentansprüche 1 oder 2, **dadurch gekennzeichnet, dass** bei der Desorbierung der organischen Verbindungen ein Spülgas mit Umgebungstemperatur verwendet wird.

4. Verfahren nach einem der Patentansprüche 1 bis 3, **dadurch gekennzeichnet, dass** das Verfahren kontinuierlich, durch Parallelschaltung mehrerer Adsorber, oder als Bewegtbett-, Wirbelschicht-Adsorber oder mit Adsorptionsrädem durchgeführt wird.

5. Verfahren nach mindestens einem der Ansprüche 1 bis 4, **dadurch gekennzeichnet, dass** es sich bei den organischen Verbindungen um Lösungsmittel-, Aroma- und Geruchstoffe und/oder andere Spurenstoffe aus Abluft oder Abgasen handelt.

## Patentansprüche (Patentansprüche für folgende(n) Vertragsstaat(en): DE, ES, FR, GB, IT, SE)

1. Verfahren zur Rückgewinnung und/oder Entfernung organischer Verbindungen aus Gasströmen, umfassend die Schritte:
Entfernen der organischen Verbindungen aus dem Gasstrom mittels eines Adsorbens und
Desorbieren der organischen Verbindungen von dem Adsorbens unter Einsatz von Mikrowellen,
wobei das Adsorbens eine fein disperse Mischung aus hydrophilen und hydrophoben Adsorbentien ist, **dadurch gekennzeichnet, dass** das Adsorbens als Formkörper aus mikrodispers in einer Matrix verteilten Einschlüssen vorliegt.

2. Verfahren nach Patentanspruch 1, **dadurch gekennzeichnet, dass** die desorbierten organischen Verbindungen kondensiert oder einer katalytischen oder thermischen Nachverbrennung zugeführt werden.

3. Verfahren nach einem der Patentansprüche 1 oder 2, **dadurch gekennzeichnet, dass** bei der Desorbierung der organischen Verbindungen ein Spülgas mit Umgebungstemperatur verwendet wird.

4. Verfahren nach einem der Patentansprüche 1 bis 3, **dadurch gekennzeichnet, dass** das Verfahren kontinuierlich, durch Parallelschaltung mehrerer Adsorber, oder als Bewegtbett-, Wirbelschicht-Adsorber oder mit Adsorptionsrädem durchgeführt wird.

5. Verfahren nach mindestens einem der Ansprüche 1 bis 4, **dadurch gekennzeichnet, dass** es sich bei den organischen Verbindungen um Lösungsmittel-, Aroma- und Geruchstoffe und/oder andere Spurenstoffe aus Abluft oder Abgasen handelt.

## Claims (Claims for the following Contracting State(s): DE, ES, FR, GB, IT, SE)

1. Method for recovering and/or removing organic compounds from gas flows, comprising the steps of:
removing the organic substances from the gas flow using an adsorber and
desorbing the organic compounds from the adsorber using microwaves,
wherein the adsorber is a finely dispersed mixture of hydrophilic and hydrophobic adsorbents, **characterized in that** the adsorber is present as a body of microdisperse divided inclusions.

2. Method according to patent claim 1, **characterized in that** the desorbed organic compounds are condensed or fed to a catalytic or thermic after burning.

3. Method according to one of patent claims 1 or 2, **characterized in that** the desorbing of the organic compounds is carried out using a rinsing gas having ambient temperature.

4. Method according to any of patent claims 1 to 3, **characterized in that** the method is carried out continuously using a plurality of parallel adsorbers or as fluidized bed process, moving bed process or using adsorption wheels.

5. Method according to any of claims 1 to 4, **characterized in that** the organic compounds are solvents, aroma components and odorous substances and/or other minor components from exhaust gases.

## Claims (Claims for the following Contracting State(s): AT, BE, CH, LI, CY, DK, FI, GR, IE, LU, MC, NL, PT)

1. Method for recovering and/or removing organic compounds from gas flows, comprising the steps of:
removing the organic substances from the gas flow using an adsorber and
desorbing the organic compounds from the adsorber using microwaves,
**characterized in that** the adsorber is a finely dispersed mixture of hydrophilic and hydrophobic adsorbents.

2. Method according to patent claim 1, **characterized in that** the desorbed organic compounds are condensed or fed to a catalytic or thermic after burning.

3. Method according to one of patent claims 1 or 2, **characterized in that** the desorbing of the organic compounds is carried out using a rinsing gas having ambient temperature.

4. Method according to any of patent claims 1 to 3, **characterized in that** the method is carried out continuously using a plurality of parallel adsorbers or as fluidized bed process, moving bed process or using adsorption wheels.

5. Method according to any of claims 1 to 4, **characterized in that** the organic compounds are solvents, aroma components and odorous substances and/or other minor components from exhaust gases.

## Revendications (Revendications pour l'(les) Etat(s) contractant(s) suivant(s): AT, BE, CH, LI, CY, DK, FI, GR, IE, LU, MC, NL, PT)

1. Procédé pour la récupération et/ou l'élimination de composés organiques contenus dans des courants gazeux, comprenant les étapes suivantes :
- éliminer les composés organiques du courant gazeux au moyen d'un adsorbant ; et
- désorber les composés organiques de l'adsorbant en mettant en oeuvre des hyperfréquences ;
**caractérisé en ce que** l'adsorbant est un mélange finement dispersé composé d'adsorbants hydrophiles et hydrophobes.

2. Procédé selon la revendication 1, **caractérisé en ce que** les composés organiques désorbés sont condensés ou soumis à une combustion ultérieure par voie catalytique ou par voie thermique.

3. Procédé selon l'une quelconque des revendications 1 ou 2, **caractérisé en ce que** l'on utilise, pour la désorption des composés organiques, un gaz de lavage à température ambiante.

4. Procédé selon l'une quelconque des revendications 1 à 3, **caractérisé en ce que** l'on réalise le procédé en continu, en montant en parallèle plusieurs dispositifs d'adsorption, ou bien en mettant en oeuvre des dispositifs d'adsorption à lit mobile, à lit fluidisé ou présentant des roues d'adsorption.

5. Procédé selon au moins l'une quelconque des revendications 1 à 4, **caractérisé en ce que** les composants organiques sont des substances de solvant, des substances aromatiques et des substances odorantes et/ou d'autres substances à l'état de traces provenant d'un air d'échappement ou de gaz d'échappement.

## Revendications (Revendications pour l'(les) Etat(s) contractant(s) suivant(s): DE, ES, FR, GB, IT, SE.)

1. Procédé pour la récupération et/ou l'élimination de composés organiques contenus dans des courants gazeux, comprenant les étapes suivantes;
- éliminer les composés organiques du courant gazeux au moyen d'un adsorbant ; et
- désorber les composés organiques de l'adsorbant en mettant en oeuvre des hyperfréquences ;
dans lequel l'adsorbant est un mélange finement dispersé composé d'adsorbants hydrophiles et hydrophobes, **caractérisé en ce que** l'adsorbant se présente sous la forme d'un corps moulé composé d'inclusions micro-dispersées dans une matrice.

2. Procédé selon la revendication 1, **caractérisé en ce que** les composés organiques désorbés sont condensés ou soumis à une combustion ultérieure par voie catalytique ou par voie thermique.

3. Procédé selon l'une quelconque des revendications 1 ou 2, **caractérisé en ce que** l'on utilise, pour la désorption des composés organiques, un gaz de lavage à température ambiante.

4. Procédé selon l'une quelconque des revendications 1 à 3, **caractérisé en ce que** l'on réalise le procédé en continu, en montant en parallèle plusieurs dispositifs d'adsorption, ou bien en mettant en oeuvre des dispositifs d'adsorption à lit mobile, à lit fluidisé ou présentant des roues d'adsorption.

5. Procédé selon au moins une quelconque des revendications 1 à 4, **caractérisé en ce que** les composants organiques sont des substances de solvant, des substances aromatiques et des substances odorantes et/ou d'autres substances à l'état de traces provenant d'un air d'échappement ou de gaz d'échappement.
